## Europäisches Patentamt

(19) **European Patent Office**

**Office européen des brevets**

(11) Publication number: **0 131 322**
**B1**

(12) EUROPEAN PATENT SPECIFICATION

(45) Date of publication of patent specification: **12.08.87**

(51) Int. Cl.⁴: **C 08 F 293/00**

(21) Application number: **84200858.3**

(22) Date of filing: **13.06.84**

(54) Process for the preparation of block copolymers.

(30) Priority: **24.06.83 US 507382**

(43) Date of publication of application:
**16.01.85 Bulletin 85/03**

(45) Publication of the grant of the patent:
**12.08.87 Bulletin 87/33**

(84) Designated Contracting States:
**DE FR GB IT NL**

(56) References cited:

**No relevant documents have been disclosed.**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Willis, Carl Lesley**
**15922 Red Willow**
**Houston Texas 77084 (US)**

(74) Representative: **Aalbers, Onno et al**
**P.O. Box 302**
**NL-2501 CH The Hague (NL)**

Courier Press, Leamington Spa, England.

# Description

The present invention is related to a process for the preparation of block copolymers.

As is generally known, Ziegler-Natta catalytic systems, defined in this context as a combination of metal alkyls of the Groups I to III of the Periodic Table with transition metal salts of the Groups IV to VIII of the Periodic Table, may be employed for the polymerization of alpha mono-olefins, like ethene, propene and butene. Because of the relatively short average life time of nascent polymer chains in Zieglar-Natta catalyzed polymerization processes it is not possible to obtain block copolymers with the precise segmentation which can be obtained by the — known — anionic polymerization of monoalkenylarenes and conjugated dienes.

Block copolymers with such a precise segmented structure comprising polyolefin blocks and polystyrene blocks have been prepared in the past by the selective hydrogenation of the conjugated diene blocks in block copolymers comprising styrene and conjugated diene blocks.

Efforts have been made in the past in order to avoid said hydrogenation and to prepare such block copolymers by means of polymerization only by the combination of two different polymerization techniques (see US—A—3851015 and US—A—3949016).

The present invention is concerned with such a concept wherein a block copolymer comprising an olefin block and at least one conjugated diene and/or monoalkenylarene block is prepared by a Ziegler-Natta type polymerization followed by an anionic polymerization.

Consequently, the invention is related to a process for the preparation of block copolymers, which process comprises

(a) polymerizing one or more alpha olefin monomers in a suitable diluent in the presence of a Ziegler-Natta catalyst and a transmetallation reagent selected from the group consisting of dialkyl zinc, dialkyl cadmium, tetra-alkyl lead and their salts;

(b) contacting the resulting polymer with an anionic polymerization initiator thereby forming living polymer chains;

(c) contacting the resulting living polymer chains with one or more sequentially added monomers selected from the group consisting of conjugated dienes and monoalkenylarenes;

(d) terminating the polymerization and

(e) recovering the block copolymers.

The monomers employed in stage (a) comprise any alpha olefin which can be polymerized with a Ziegler-Natta catalyst. Preferably aliphatic alpha mono-olefins with 2 to 8 carbon atoms per molecule are employed. Examples of such aliphatic alpha mono-olefins are ethene, propene, butene-1, isobutene, 3-methylbutene-1, pentene-1, hexene-1, octene-1 and mixtures thereof. Propene is the most preferred one.

The Ziegler-Natta catalyst employed in stage (a) preferably comprises a catalyst formed by admixing a subhalide of a metal selected from the group of metals of Groups IVa, Va and VIa of the Periodic Table and an aluminium compound containing at least one carbon-metal bond. Examples of these subhalides are those of vanadium, zirconium, thorium and titanium. The preferred one is titanium trichloride and more specifically titanium trichloride cocrystallized with aluminium chloride according to the formula $nTiCl_3.AlCl_3$, where n is a number from 1 to 5. Examples of the aluminium compound containing at least one carbon-metal bond are alkyl aluminium compounds wherein the alkyl groups contain from 1 to 10 carbon atoms. Preferably triethylaluminium or dialkylaluminiumchloride is employed. The molar ratio of aluminium to titanium in the catalyst ranges from 0.01:1 to 3:1 and preferably from 0.05:1 to 0.5:1. In addition the Ziegler-Natta catalyst may be modified by addition of an electron donor. Examples of such electron donors are phosphines, phosphine oxides, phosphites, phosphates, phosphoric amides, amines, amides, imides, lactams, heterocyclic compounds, ethers, ketones, aldehydes, esters, lactones, silicates, siloxanes, sulphides, thiols, thiophenols, thioesters and thiophosphites.

Preferably, the catalyst is added to the reaction mixture after having been solved, preferably in the diluent wherein the stage (a)-polymerization is conducted.

The total quantity of catalyst required to effect the stage (a)-polymerization can be determined readily by one skilled in the art and depends among others upon the particular conditions such as temperature, impurities and molecular weight desired. The total quantity of catalyst employed, expressed in millimoles of the organoaluminium halide per hundred grams of monomer, generally varies in the range of from 0.3 to 30 and preferably of from 0.5 to 10.

The stage (a)-polymerization may be conducted at a temperature of from 0°C to 120°C and preferably of from 30°C to 80°C. The pressure during this polymerization may be varied widely. This polymerization reaction may be carried out under autogenous pressure or at any suitable pressure sufficient to maintain the reaction mixture substantially in the liquid phase. However, higher pressures can be employed if desired by the pressurization of the reactor with an inert gas.

The diluents which may be employed in stage (a) include paraffinic, cycloparaffinic or aromatic hydrocarbons having 4 to 10 carbon atoms per molecule or mixtures thereof. The monomers used in the reaction may also be employed as diluents. Examples of these diluents are n-hexane, n-heptane, cyclohexane, cyclopentane, benzene, toluene, the xylenes, 2,2,4-trimethylpentane, ethene, propene and 1-butene. n-Heptane is the most preferred diluent.

The transmetallation reagent employed in stage (a) is selected from the group consisting of dialkyl zinc, dialkyl cadmium, tetra-alkyl lead and their salts. Preferably the alkyl moieties are selected from the group consisting of methyl, ethyl, propyl and octyl. Diethylzinc is the most preferred transmetallation reagent. The transmetallation reagent may be added before the initiation of the stage (a)-polymerization or during this polymerization. Preferably, the transmetallation reagent is added before said initiation. The amount of the transmetallation reagent is in the range of from 0.1 to 100 mole per mole of catalyst. Preferably, the transmetallation reagent is added to the reaction mixture after having been solved, preferably in the diluent wherein the stage (a)-polymerization is conducted.

The polymerization time of stage (a) may vary with reactants and conditions but will usually be in the range of from 15 min to 8 h.

As polymerization initiator, employed in stage (b), any of the hydrocarbon monolithium initiators known in the anionic solution polymerization art can be employed. These initiators may be represented by RLi or ROLi wherein O is oxygen, Li is lithium and R is an aliphatic, cycloaliphatic or aromatic hydrocarbon radical, preferably having up to 20 carbon atoms like e.g. n-butyllithium, sec-butyllithium, t-butyllithium, n-decyllithium, phenyllithium, l-naphthyllithium, p-tolyllithium, cyclohexyllithium, eicosyllithium, lithium methoxide and lithium ethoxide.

The amount of initiator employed depends on the molecular weight desired and thus may vary widely. Generally, the amount is in the range of 0.05 to 20 milli-equivalents of lithium per 100 grams of total monomer. Preferably, the initiator is added to the reaction mixture after having been solved, preferably in the diluent wherein the stage (c)-polymerization is conducted.

The monomers employed in stage (c) are selected from the group consisting of conjugated dienes and monoalkylenes. Preferably, the conjugated dienes contain 4 to 12 carbon atoms per molecule.

Examples of these conjugated dienes include 1,3-butadiene, isoprene, 2,3-dimethyl-1,3-butadiene, 2-methyl-1,3-pentadiene, 2,3-dimethyl-1,3-pentadiene, 2-methyl-3-ethyl-1,3-pentadiene, 2-phenyl-1,3-butadiene and mixtures thereof. The most preferred conjugated dienes are 1,3-butadiene and isoprene. Preferred monoalkenylarenes are styrene and alpha methylstyrene and their ring substituted analogs, the most preferred one is styrene.

If desired additional hydrocarbon diluent may be added at this stage so as to keep the reaction mixture viscosity low enough to be adequately stirred. The stage (c)-polymerization is preferably conducted at a temperature of from 0 to 150°C. The polymerization pressure will vary as in stage (a).

The amount of hydrocarbon diluent to be added, if desired, at this stage can vary widely. It is convenient to use the same diluent in each polymerization stage to avoid possible complexities in ultimate separation and recycle. Generally, the amount of diluent at this stage is added such that the ratio of total weight of diluent to total weight of all monomers added in all steps of the polymerization process is 3:1 to 25:1 and preferably 5:1 to 10:1.

The polymerization time of stage (c) may vary over a broad range of from 2 min to several hours.

It will be clear that the polymerization time will be longer if more than one monomer selected from the group consisting of monoalkenylarenes and conjugated dienes is added in successive stages in order to prepare polymers comprising three or more blocks.

After the desired block copolymer has been prepared the polymerization is terminated. In the context of this specification, the term "termination" refers either to the so called killing of the living polymer, which means the removal of the lithium with a non-coupling agent as e.g. water, acid or alcohol or the coupling of two or more living block copolymers by means of a coupling agent so as to produce a linear or a radially branched product.

Both termination techniques are generally known in the art.

A wide variety of coupling agents, which are known in the art, can be employed, such as multivinylaromatic compounds, multiepoxides, multiisocyanates, multiimines, multialdehydes, multiketones, multianhydrides, multiesters which are the esters of polyalcohols with monocarboxylic acids or esters of polyacids with monohydric alcohols, and the diesters which are esters of monohydric alcohols with dicarboxylic acids, monoesters, multihalides, carbon monoxide and carbon dioxide. The most preferred coupling agents include divinyl benzene in either its ortho, meta or para isomer, diethyl adipate, silicon tetrachloride and dibromo ethane.

For the purpose of coupling, one equivalent of coupling agent per equivalent of lithium is considered an optimum amount for maximum branching. Any range of treating agent can be employed, depending on the degree of coupling desired. Generally, 0.5 to 1.5 equivalents of coupling agent per equivalent of lithium are employed.

The coupling agent can be added neat or alternately added in an inert hydrocarbon solution, such as in cyclohexane. The coupling agent can be added in one batch, incrementally or continuously. The coupling reaction normally is conducted at the same temperature as employed in the stage (c)-polymerization step. The time for the coupling reaction can range from a few minutes to several hours, preferably from 1 min to 30 min. The reaction mixture is agitated during the coupling reaction.

After the termination of the polymerization the polymer is recovered by methods known in the art. In one suitable method water or alcohol is added to the polymer mixture in order to precipitate the polymer and subsequently the polymer is separated from the alcohol or water and diluent by any suitable means such as decantation or filtration. Advantageously an antioxidant, such as 2,6-di-t-butyl-4-methyl-phenol, may be added to the polymer mixture prior to the precipitation of the polymer. Another suitable method to recover the polymer from the solution is steam stripping. Finally, the polymer is dried.

The block copolymers obtained according to the present invention may be compounded by methods known in the art with fillers, dyes, pigments, curing or crosslinking agents, softeners and/or reinforcing agents. In manufacturing finished articles, the polymer can be moulded or extruded.

The present invention is further illustrated by the following example.

Example

The polymerization was performed in a 4 l glass impellor stirred, constant temperature reaction vessel.

0.31 g TiCl$_3$, 1.46 g of a 25% solution of triethylaluminium in heptane and 3.3 g of a 25% solution of diethylzinc in heptane were sequentially added to 100 go of 1-butene in 1.5 l of heptane. After having polymerized for 3 h at 70°C most of the butene was consumed. 100 ml of the solution was isolated, concentrated and the polybutene (6.8 g) was analysed: number average molecular weight = 33,000, molecular weight distribution Q (weight average molecular weight divided by number average molecular weight) = 9.6, melt temperature = 107°C, hot acetone soluble by soxhlet extraction = 11%wt.

The remainder of the solution was treated with 46 mmol of lithium methoxide.

Styrene monomer was added and polymerization conditions were maintained at 25°C for 18 hr. After termination by means of killing and after recovery 110 g of polymer was obtained. Analysis by infrared spectroscopy clearly showed the presence of polymerized styrene. Soxhlet extraction (hot acetone) of the copolymer product formed showed the product to be mainly the desired polybutene-polystyrene (PB—PS) diblock copolymer. Extraction of the hot polymer would remove the styrene homopolymer which was present whereas the PS-block of the PS—PB diblock copolymer would resist such extraction as a result of the chemical bond between the PS-block and the PB-block. Since most of the PS resisted extraction (styrene content dropped from 48%w to 41%w after extraction) only a small portion was homopolystyrene.

**Claims**

1. Process for the preparation of block copolymers, which process comprises

(a) polymerizing one or more alpha olefin monomers in a suitable diluent in the presence of a Ziegler-Natta catalyst and a transmetallation reagent selected from the group consisting of dialkyl zinc, dialkyl cadmium, tetra-alkyl lead and their salts;

(b) contacting the resulting polymer with an anionic polymerization initiator thereby forming living polymer chains;

(c) contacting the resulting living polymer chains with one or more sequentially added monomers selected from the group consisting of conjugated dienes and monoalkenylarenes;

(d) terminating the polymerization and

(e) recovering the block copolymers.

2. Process according to claim 1, characterized in that the alpha olefin is ethene, propene, butene-1 or a mixture thereof.

3. Process according to claim 1 or 2, characterized in that the transmetallation reagent is diethylzinc.

4. Process according to any of claims 1—3, characterized in that the anionic polymerization initiator is a compound represented by RLi or ROLi, wherein O is oxygen, Li is lithium and R is an aliphatic, cycloaliphatic or aromatic hydrocarbon radical having up to 20 carbon atoms.

5. Process according to any of claims 1—4, characterized in that the conjugated diene is butadiene or isoprene and the monoalkenylarene is styrene.

6. Process according to any of claims 1—5, characterized in that the termination of the polymerization is conducted by coupling the living block copolymers.

7. Process according to claim 6, characterized in that the coupling agent is divinylbenzene, diethyl adipate, silicon tetrachloride or dibromo ethane.

**Patentansprüche**

1. Verfahren zur Herstellung von Blockcopolymeren umfassend (die folgenden Stufen)

(a) Polymerisieren eines oder mehrerer α-Olefine in einem geeigneten Verdünnungsmittel in Gegenwart eines Ziegler-Natta-Katalysators und eines Übergangsmetall -Reagenzes ausgewählt aus der Gruppe bestehend aus Dialkyl-zink, Dialkyl-cadmium, Tetraalkyl-blei und deren Salzen,

(b) Zusammenbringen des erhaltenen Polymers mit einem anionischen Polymerisationsinitiator, wodurch lebende Polymerketten entstehen,

(c) Zusammenbringen der entstandenen lebenden Polymerketten mit einem oder mehreren nacheinander zugesetzten Monomeren ausgewählt aus der Gruppe bestehend aus konjugierten Dienen und Monoalkenylarenen,

(d) Abbrechen der Polymerisation und

(e) Gewinnung der Blockcopolymeren.

2. Verfahren nach Anspruch 1, dadurch gekennzeichnet, daß das α-Olefin Ethen, Propen, Buten-1 oder ein Gemisch davon ist.

3. Verfahren nach Anspruch 1 oder 2, dadurch gekennzeichnet, daß das Übergangsmetall-Reagenz Diethyl-zink ist.

4. Verfahren nach einem der Ansprüche 1 bis 3, dadurch gekennzeichnet, daß der anionische Polymerisationsinitiator eine Verbindung ist, angegeben durch RLi oder ROLi, wobei O Sauerstoff, Li Lithium und R eine aliphatische, cycloaliphatische oder aromatische Kohlenwasserstoffgruppe mit bis zu 20 Kohlenstoffatomen ist.

5. Verfahren nach einem der Ansprüche 1 bis 4, dadurch gekennzeichnet, daß das konjugierte Dien Butadien oder Isopren und das Monoalkenylaren Styrol ist.

6. Verfahren nach einem der Ansprüche 1 bis 5, dadurch gekennzeichnet, daß der Abbruch der Polymerisation durchgeführt wird durch Kupplung der lebenden Blockcopolymere.

7. Verfahren nach Anspruch 6, dadurch gekennzeichnet, daß das Kupplungsmittel Diphenylbenzol, Diethyladipat, Siliciumtetrachlorid oder Dibromethan ist.

**Revendications**

1. Procédé de préparation de copolymères séquencés, ce procédé comprenant les étapes qui consistent à:

(a) polymériser un ou plusieurs monomères d'α-oléfines dans un diluant convenable, en présence d'un catalyseur de Ziegler-Natta et d'un réactif de transmétallisation choisi dans le groupe constitué par un dialkyl-zinc, un dialkyl-cadmium, un tétra-alkyl-plomb et leurs sels;

(b) mettre en contact le polymère résultant avec un initiateur de polymérisation anionique, pour former ainsi des chaînes de polymère vivantes;

(c) mettre en contact les chaînes de polymère vivantes résultantes avec un ou plusieurs monomères ajoutés l'un après l'autre choisis dans le groupe constitué par les diènes conjugués et les monoalcénylarènes;

(d) terminer la polymérisation; et

(e) récupérer les copolymères séquencés.

2. Procédé selon la revendication 1, caractérisé en ce que l'α-oléfine est l'éthène, le propène, le butène-1, ou un de leurs mélanges.

3. Procédé selon la revendication 1 ou 2, caractérisé en ce que le réactif de transmétallisation est le diéthylzinc.

4. Procédé selon l'une quelconque des revendications 1 à 3, caractérisé en ce que l'initiateur de polymérisation anionique est un composé représenté par RLi ou ROLi, où O est un oxygène, Li est un lithium et R est un radical hydrocarboné aliphatique, cycloaliphatique ou aromatique ayant jusqu'à 20 atomes de carbone.

5. Procédé selon l'une quelconque des revendications 1 à 4, caractérisé en ce que le diène conjugué est le butadiène ou l'isoprène, et en ce que le monoalcénylarène est le styrène.

6. Procédé selon l'une quelconque des revendications 1 à 5, caractérisé en ce que la terminaison de la polymérisation est effectuée par couplage des copolymères séquencés vivants.

7. Procédé selon la revendication 6, caractérisé en ce que l'agent de couplage est le divinylbenzène, l'adipate de diéthyle, le tétrachlorure de silicium ou le dibromo-éthane.